# EUROPÄISCHE PATENTSCHRIFT

(11) **EP 3 390 158 B1**
(45) Veröffentlichungstag und Bekanntmachung des Hinweises auf die Patenterteilung: **26.06.2019**
(21) Anmeldenummer: 16812922.9
(22) Anmeldetag: 08.12.2016
(51) Int. Cl.: B60R 11/02, G06F 3/01

(54) **KRAFTFAHRZEUG-BEDIENVORRICHTUNG MIT EINFAHRBAREM BERÜHRUNGSBILDSCHIRM**
MOTOR VEHICLE CONTROL APPARATUS WITH RETRACTABLE TOUCH SCREEN
DISPOSITIF DE COMMANDE DE VEHICULE AUTOMOBILE AVEC ÉCRAN TACTILE RÉTRACTABLE

(30) Priorität: 18.12.2015 DE 102015016499
(43) Veröffentlichungstag der Anmeldung: 24.10.2018
(73) Patentinhaber: Audi AG, 85045 Ingolstadt (DE)
(72) Erfinder: WALL, Christian, 85122 Hitzhofen (DE)
(86) Internationale Anmeldenummer: PCT/EP2016/080293
(87) Internationale Veröffentlichungsnummer: WO 2017/102552

(56) Entgegenhaltungen:
- DE-A1-102013 019 571
- DE-A1-102014 209 801
- US-A1- 2007 097 094

## Beschreibung

Die Erfindung betrifft eine Bedienvorrichtung für ein Kraftfahrzeug, bei welchem ein Berührungsbildschirm (Touchscreen) an einer Verschwenkeinrichtung befestigt ist, mittels welcher sich der Berührungsbildschirm an einem Verkleidungsteil des Kraftfahrzeugs befestigen und bezüglich des Verkleidungsteils verschwenken lässt. Zu der Erfindung gehören auch ein Kraftfahrzeug mit der Bedienvorrichtung sowie ein Verfahren zum Betreiben eines Berührungsbildschirms in einem Kraftfahrzeug.

Eine Bedienvorrichtung der beschriebenen Art ist beispielsweise aus der DE 10 2013 012 473 A1 bekannt. Danach weist die Verschwenkeinrichtung eine Trägerplatte auf, an welcher der Berührungsbildschirm befestigt ist. Die Trägerplatte hängt an vier Schwenkelementen, mittels welchen zwei Koppelgetriebe zum schwenkbaren Lagern der Trägerplatte an dem Verkleidungsteil gebildet sind.

Die selbe Bedienvorrichtung ist aus der DE 10 2013 019 571 A1 bekannt, wobei hier zusätzlich vorgesehen ist, ein Vibrieren des Bildschirms zu erzeugen, wenn ein Benutzer zu kräftig mit einem Finger auf den Berührungsbildschirm drückt. Hierdurch soll verhindert werden, dass die Koppelgetriebe durch den Druck beschädigt werden. Zum Erfassen des Anpresskraft des Fingers des Benutzers ist ein Kraftsensor in einer Anschlagsfläche für die Bedienvorrichtung vorgesehen.

Die beiden bekannten Bedienvorrichtungen weisen den Vorteil auf, dass sich der Berührungsbildschirm im Innenraum eines Verkleidungsteils in einer Verstaustellung verstauen lässt und durch einen verhältnismäßig schmalen Spalt oder Schlitz durch das Verkleidungsteil hindurch in den Fahrgastraum in eine Gebrauchstellung verschwenken lässt. Um allerdings eine haptische Rückmeldung an den Berührungsbildschirm zu erzeugen, ist eine entsprechende Aktoreinheit nötig. Möchte man diese in den Berührungsbildschirm integrieren, so muss die Aktoreinheit zusammen mit dem Berührungsbildschirm durch den Spalt hindurch passen, damit der Berührungsbildschirm weiterhin von der Verstaustellung in die Gebrauchsstellung ausgefahren werden kann.

Aus der DE 10 2008 023 469 A1 ist bekannt, einen Berührungsbildschirm verschwenkbar zu lagern und diesen aber nicht durch einen engen Spalt hindurch in den Fahrgastraum zu verfahren, sondern stattdessen eine breite Öffnung in einem Verkleidungsteil vorzusehen, die in der Verstaustellung des Berührungsbildschirms durch eine Klappe abgedeckt ist. Nachteilig hierbei ist, dass ein verhältnismäßig großer Bereich des Verkleidungsteils zum Ausfahren des Berührungsbildschirms genutzt werden muss, sodass die Anordnung anderer Bedienelemente hier nicht mehr möglich ist.

Das Dokument DE 10 2014 209801 offenbart eine Bedienvorrichtung für ein Kraftfahrzeug nach dem Oberbegriff des Anspruchs 1.

Der Erfindung liegt die Aufgabe zugrunde, in einem Kraftfahrzeug einen versenkbaren oder verstaubaren Berührungsbildschirm bereitzustellen, der sich durch einen Spalt hindurch aus einem Verkleidungsteil des Kraftfahrzeugs ausfahren lässt und der dennoch eine Aktoreinheit zum Bereitstellen einer taktilen Rückmeldung aufweisen kann.

Die Aufgabe wird durch die Gegenstände der unabhängigen Patentansprüche gelöst. Vorteilhafte Weiterbildungen der Erfindung sind durch die abhängigen Patentansprüche, die Beschreibung und die Figuren angegeben.

Durch die Erfindung ist eine Bedienvorrichtung für ein Kraftfahrzeug bereitgestellt. In der beschriebenen Weise ist ein Berührungsbildschirm zum Anzeigen von grafischen Objekten auf einer Anzeigefläche und zum Erfassen von Berührkoordinaten einer durch einen Benutzer an der Anzeigefläche getätigten Bildschirmberührung vorgesehen. Mit anderen Worten ist ein so genannter Touchscreen vorgesehen. Des Weiteren ist eine Verschwenkeinrichtung zum Halten des Berührungsbildschirms an einem Verkleidungsteil des Kraftfahrzeugs und zum Verschwenken des Berührungsbildschirms bezüglich des Verkleidungsteils vorgesehen. Beispielsweise kann der Berührungsbildschirm mittels der Verschwenkeinrichtung in einer Schalttafel oder einem Armaturenbrett des Kraftfahrzeugs befestigt oder gehalten sein. Für die verschwenkbare Lagerung ist insbesondere vorgesehen, dass die Verschwenkeinrichtung eine Trägerplatte, an welcher der Berührungsbildschirm starr befestigt ist, und zumindest zwei Schwenkelemente aufweist, von denen jedes zwei Drehgelenke aufweist, die an gegenüberliegenden Enden des Schwenkelements angeordnet sind und von denen eines der Drehgelenke mit der Trägerplatte verbunden ist, sodass die Trägerplatte für die zumindest zwei Schwenkelemente als ein Koppelglied eines Koppelgetriebes wirkt, und das andere der Drehgelenke direkt oder indirekt mit dem Verkleidungsteil verbindbar ausgestaltet ist. Diese Anordnung geht beispielsweise aus den beiden eingangs genannten Druckschriften hervor.

Um auch eine haptische oder taktile Rückmeldung (Feedback) an der Anzeigefläche bereitstellen zu können, ist bei der Bedienvorrichtung eine Aktoreinheit bereitgestellt. Damit durch Bereitstellen der Aktoreinheit ein Bauvolumen oder ein Raumbedarf des Berührungsbildschirms nicht steigt, ist erfindungsgemäß vorgesehen, dass die Aktoreinheit für die Verschwenkeinrichtung bereitgestellt ist. Die Aktoreinheit ist dazu eingerichtet, in Abhängigkeit von einem vorbestimmten Aktivierungssignal die Verschwenkeinrichtung (insbesondere im ausgefahrenen Zustand) mechanisch zu erschüttern und hierdurch an der Anzeigefläche die taktile Rückmeldung für den Benutzer zu erzeugen. Mit Erschüttern ist hierbei gemeint, dass durch die Aktoreinheit in der Verschwenkeinrichtung ein Körperschall oder eine Vibration oder ein Impuls erzeugt wird. Allgemein ist eine Auslenkung der Verschwenkeinrichtung aus einer Ausgangslage heraus vorgesehen. Die Auslenkung dauert hierbei insbesondere weniger als eine Sekunde. Die Auslenkung ist hierbei insbesondere kleiner als 2 Millimeter. Indem der Berührungsbildschirm fest mit einem Element der Verschwenkeinrichtung, beispielsweise mit der besagten Trägerplatte, verbunden ist, wird die mechanische Erschütterung von der Verschwenkeinrichtung auf den Berührungsbildschirm übertragen. Befindet sich die Verschwenkeinrichtung innerhalb eines Verkleidungsteils und ist der Berührungsbildschirm durch einen Spalt des Verkleidungsteils hindurch in den Fahrgastraum hinein gestreckt, um hier in der Gebrauchsstellung von einem Benutzer bedient zu werden, so wird also durch die Aktoreinheit die Erschütterung an der Verschwenkeinrichtung im Inneren des Verkleidungsteils erzeugt und die Erschütterung dann durch den Spalt hindurch auf die Anzeigefläche außerhalb des Verkleidungsteils in den Fahrgastraum übertragen. Damit muss also die Aktoreinheit nicht selbst durch den Spalt hindurch in den Fahrgastraum verschwenkt werden.

Zu der Erfindung gehören auch optionale Weiterbildungen, durch deren Merkmale sich zusätzliche Vorteile ergeben.

Als Aktoreinheit ist insbesondere eine elektromechanische Aktoreinheit vorgesehen. Beispielsweise kann ein Elektromotor vorgesehen sein, der durch eine elektrische Drehmaschine gebildet ist. Durch einen solchen Rotationsmotor kann eine rotierende Masse mit Umwucht gedreht werden, sodass als Erschütterung eine Vibration erzeugt wird. Bevorzugt ist aber vorgesehen, dass durch die Aktoreinheit ein Anregungsimpuls auf der Anzeigefläche erzeugt wird, also eine einmalige, unidirektionale Auslenkung der Anzeigefläche aus der beschriebenen Ausgangslage. Hierdurch wird an der Anzeigefläche ein Klicken oder ein Knacken wie bei einem mechanischen Schalter oder einer mechanischen Taste erzeugt. Somit wird an der Anzeigefläche bei Bedienen eines grafischen Objekts, beispielsweise einer Tastfläche oder eines Icons, ein mechanischer Schalter nachgeahmt oder simuliert. Um diesen Anregungsimpuls zu erzeugen, sieht eine Weiterbildung vor, dass die Aktoreinheit eine elektrische Spule aufweist, die dazu eingerichtet ist, die Erschütterung durch Beschleunigen eines ferromagnetischen Ankerelements und anschließendes Kollidieren des beschleunigten Ankerelements mit einem Anschlagelement zu erzeugen. Als ferromagnetisches Material des Ankerelements kann ein weichmagnetisches Material (mit einer Koerzitivfeldstärke kleiner als 1000A/m) oder ein permanent magnetisches Material vorgesehen sein. Ein permanent magnetisches Material weist den Vorteil auf, dass es durch die elektrische Spule bidirektional ausgelenkt werden kann.

Bei Verwendung der elektrischen Spule sieht eine Weiterbildung vor, dass als das Ankerelement ein von der Verschwenkeinrichtung verschiedenes Massestück bereitgestellt ist, beispielsweise eine Stange oder ein Stab, und als das Anschlagelement ein Element der Verschwenkeinrichtung selbst vorgesehen ist. Mit anderen Worten wird durch die elektrische Spule in Abhängigkeit von dem Aktivierungssignal das Massestück beschleunigt und gegen das Element der Verschwenkeinrichtung geschleudert oder geschlagen. Hierdurch ergibt sich der Vorteil, dass die Wahl der beschleunigten Masse in Form des Massestücks unabhängig von der Ausgestaltung der Verschwenkeinrichtung gewählt werden kann und hierdurch die taktile Rückmeldung gezielt durch Auswahl des Massestücks eingestellt werden kann. Alternativ dazu ist vorgesehen, dass das Element der Verschwenkeinrichtung selbst als das Ankerelement verwendet wird und die elektrische Spule das Anschlagelement bildet. Mit anderen Worten wird bei durch das Aktivierungssignal aktivierter elektrischer Spule ein Element der Verschwenkeinrichtung von der elektrischen Spule angezogen und gegen die elektrische Spule gezogen, wo es dann mit der elektrischen Spule kollidiert. Dies weist den Vorteil auf, dass kein separates Massestück oder zusätzliches Massestück zum Erzeugen der Erschütterung nötig ist. Dies verringert einen Bauraumbedarf sowie das Gewicht der Bedienvorrichtung.

Eine Weiterbildung sieht vor, dass die Aktoreinheit an der Verschwenkeinrichtung selbst befestigt ist. Beispielsweise kann die Aktoreinheit an einem der besagten Schwenkelemente oder an der Trägerplatte angeordnet sein. Die Aktoreinheit ist hierdurch in vorteilhafter Weise von der Verschwenkeinrichtung selbst getragen und muss nicht andernorts in dem Kraftfahrzeug befestigt oder gelagert sein. Alternativ dazu ist vorgesehen, dass die Verschwenkeinrichtung bezüglich der Aktoreinheit beweglich ist. Mit anderen Worten ist die Aktoreinheit an einem anderen Element des Kraftfahrzeugs zu befestigen, beispielsweise dem beschriebenen Verkleidungsteil oder einem Gehäuse der Bedienvorrichtung. Hierdurch ergibt sich der Vorteil, dass ein größerer Impuls von der Aktoreinheit auf die Verschwenkeinrichtung übertragen werden kann.

Eine Weiterbildung sieht vor, dass die Aktoreinheit dazu eingerichtet ist, die Verschwenkeinrichtung mit einem parallel zu der Anzeigefläche ausgerichteten Impuls zu beaufschlagen. In dieser Richtung ist in der Regel die Verschwenkeinrichtung am einfachsten oder mit der geringsten Kraft auslenkbar, sodass die taktile Rückmeldung besonders deutlich an der Anzeigeeinrichtung erzeugt werden kann. Alternativ dazu ist vorgesehen, dass die Aktoreinheit dazu eingerichtet ist, die Verschwenkeinrichtung mit einem Impuls zu beaufschlagen, der eine überwiegende Richtung senkrecht zur Anzeigefläche aufweist. Hierdurch ergibt sich der Vorteil, dass sich die Anzeigefläche beim Abgeben der taktilen Rückmeldung an beispielsweise einen Finger des Benutzers wie ein mechanischer Schalter verhält. Mit "Parallel zur Anzeigefläche" und "senkrecht zur Anzeigefläche" ist gemeint, dass ein Richtungsvektor des Impulses in die entsprechende Richtung bezüglich der Anzeigeebene der Anzeigefläche ausgerichtet ist.

Eine Weiterbildung sieht vor, dass eine Steuereinrichtung bereitgestellt ist, die dazu eingerichtet ist, das Aktivierungssignal bei Erfassen der Bildschirmberührung zu erzeugen. Als Steuereinrichtung kann beispielsweise ein Mikrocontroller oder ein Mikroprozessor oder eine elektronische Schaltung vorgesehen sein. Die Weiterbildung weist den Vorteil auf, dass die taktile Rückmeldung in Reaktion auf die Bildschirmberührung erfolgt. Hierdurch kann ein Benutzer ohne Hinsehen durch Fühlen herausfinden, ob er die Bedienvorrichtung erfolgreich bedient oder betätigt hat. Dies verringert ein Ablenkungspotential der Bedienvorrichtung während einer Fahrt mit dem Kraftfahrzeug.

Besonders bevorzugt ist hierbei vorgesehen, dass zumindest ein Kraftsensor zum Erfassen einer von dem Benutzer bei der Bildschirmberührung auf die Anzeigefläche ausgeübten Anpresskraft bereitgestellt ist und die Steuereinrichtung dazu eingerichtet ist, das Aktivierungssignal zu erzeugen, falls die erfasste Anpresskraft größer als ein vorbestimmter Schwellenwert oder Schwellwert ist. Als der zumindest eine Kraftsensor kann die bereits eingangs beschriebene Kraftsensoranordnung aus dem Stand der Technik genutzt werden. Die Weiterbildung weist den Vorteil auf, dass nicht schon allein ein versehentliches Streifen oder leichtes Berühren der Anzeigefläche eine Auslösung der Bedienvorrichtung verursacht. Insbesondere ist also auch vorgesehen, dass auch ein Steuersignal, durch welches die Bedienvorrichtung ein anderes Fahrzeuggerät in Abhängigkeit von der Bildschirmberührung steuert, erst bei Überschreiten des Schwellwertes ansteuert.

Wie bereits ausgeführt, gehört zu der Erfindung auch ein Kraftfahrzeug. In der beschriebenen Weise ist ein Verkleidungsteil bereitgestellt, durch welches ein Verstauraum von einem Fahrgastraum des Kraftfahrzeugs abgegrenzt ist. Das Verkleidungsteil kann beispielsweise eine Schalttafel oder ein Armaturenbrett sein. Der Verstauraum ist dann derjenige Bereich, der sich vom Fahrgastraum aus gesehen unterhalb oder innerhalb des Verkleidungsteils befindet und in dem beispielsweise Geräte und/oder Lüftungskanäle angeordnet sein können. Des Weiteren ist eine Ausführungsform der erfindungsgemäßen Bedienvorrichtung bereitgestellt, wobei der Berührungsbildschirm der Bedienvorrichtung über die Verschwenkeinrichtung mit dem Verkleidungsteil verbunden ist. Ist als Verschwenkeinrichtung die beschriebene Anordnung aus Trägerplatte und Schwenkelementen vorgesehen, so ist jeweils das andere Drehgelenk jenes Schwenkelements, das also nicht mit der Trägerplatte verbunden ist, direkt oder indirekt an dem Verkleidungsteil drehbar gehalten. Insbesondere ist der Berührungsbildschirm ausschließlich über die Verschwenkeinrichtung mit dem Verkleidungsteil verbunden. Des Weiteren ist eine Verfahreinrichtung vorgesehen, welche dazu eingerichtet ist, den Berührungsbildschirm mittels der Verschwenkeinrichtung zwischen einer Verstaustellung, in welcher der Berührungsbildschirm größtenteils oder vollständig in dem Verstauraum angeordnet ist, und einer Gebrauchsstellung, in welcher die Anzeigefläche des Berührungsbildschirm in dem Fahrgastraum angeordnet ist, zu verschwenken. Als Verfahreinrichtung kann beispielsweise ein elektromechanischer Aktor, beispielsweise ein Elektromotor, vorgesehen sein. Bei dem erfindungsgemäßen Kraftfahrzeug kann also der Berührungsbildschirm der Bedienvorrichtung motorisch mittels der Verfahreinrichtung zwischen der Verstaustellung und der Gebrauchsstellung verfahren werden.

Insbesondere ist hierbei in der beschriebenen Weise vorgesehen, dass das Verkleidungsteil einen Spalt aufweist und die Verfahreinrichtung dazu eingerichtet ist, den Berührungsbildschirm beim Verschwenken zwischen der Verstaustellung und der Gebrauchsstellung durch den Spalt hindurch zu bewegen, wobei in der Verstaustellung der Spalt durch eine Kante des Berührungsbildschirms verschlossen ist. Der Spalt kann also derart schmal sein, dass er durch die Kante des Berührungsbildschirms verschlossen werden kann. Dies ist möglich, weil die zum Erzeugen der taktilen Rückmeldung vorgesehene Aktoreinheit nicht ebenfalls mit durch den Spalt hindurch bewegt werden muss.

Schließlich gehört zu der Erfindung auch ein Verfahren zum Betreiben eines Berührungsbildschirms in einem Kraftfahrzeug, wobei eine Verschwenkeinrichtung den Berührungsbildschirm an einem Verkleidungsteil des Kraftfahrzeugs hält und eine Verfahreinrichtung den Berührungsbildschirm mittels der Verschwenkeinrichtung bezüglich des Verkleidungsteils verschwenkt, wobei die Verschwenkeinrichtung bevorzugt eine Trägerplatte, an welcher der Berührungsbildschirm befestigt ist, und zumindest zwei Schwenkelemente aufweist, von denen jedes zwei Drehgelenke aufweist, die an gegenüberliegenden Enden des Schwenkelementes angeordnet sind und von denen eines der Drehgelenke mit der Trägerplatte verbunden ist, sodass die Trägerplatte für die zumindest zwei Schwenkelemente als ein Koppelglied eines Koppelgetriebes wirkt, und das andere der Drehgelenke mit dem Verkleidungsteil verbunden ist. In der beschriebenen Weise erschütterte eine Aktoreinheit in Abhängigkeit von einem vorbestimmten Aktivierungssignal die Verschwenkeinrichtung mechanisch und erzeugt hierdurch an einer Anzeigefläche des Berührungsbildschirms eine taktile Rückmeldung für einen Benutzer.

Zu der Erfindung gehören auch Weiterbildungen des erfindungsgemäßen Verfahrens, welche Merkmale aufweisen, wie sie bereits im Zusammenhang mit den Weiterbildungen der erfindungsgemäßen Bedienvorrichtung beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Darstellung eines Kraftfahrzeugs mit einer Bedienvorrichtung in einer Verstaustellung,
- Fig. 2: die Bedienvorrichtung von Fig. 1 während eines Verschwenkvorgangs eines Berührungsbildschirms,
- Fig. 3: die Bedienvorrichtung von Fig. 1 in einer Gebrauchsstellung,
- Fig. 4: eine schematische Darstellung der Bedienvorrichtung in der Gebrauchsstellung während eines Bedienvorgangs,
- Fig. 5: eine schematische Darstellung der Bedienvorrichtung vor Fig. 4 beim Erzeugen einer taktilen Rückmeldung,
- Fig. 6: eine schematische Darstellung einer Aktoreinheit für die Bedienvorrichtung,
- Fig. 7: eine schematische Darstellung einer weiteren Aktoreinheit für die Bedienvorrichtung,
- Fig. 8: eine schematische Darstellung einer weiteren Aktoreinheit für die Bedienvorrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

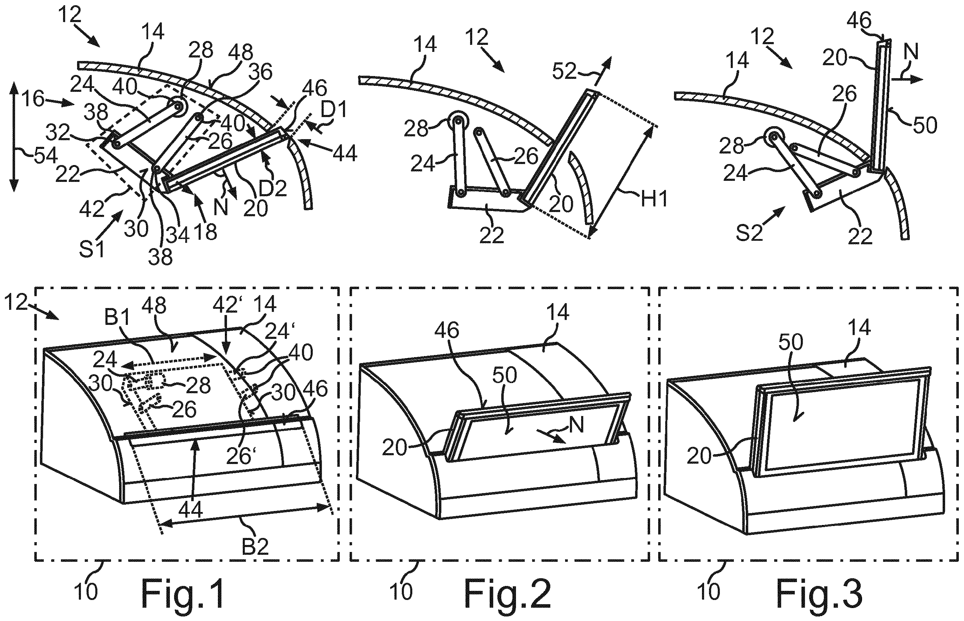

In Fig. 1 bis Fig. 3 ist jeweils in einem unteren Teil perspektivisch ein Kraftfahrzeuginnenraum oder Fahrgastraum 12 eines Kraftfahrzeugs 10 gezeigt. In dem Fahrgastraum 12 kann sich ein Verkleidungsteil 14 befinden, beispielsweise eine Mittelkonsole, eine Schalttafel oder ein in der Regel als Dome bezeichnetes, gewölbtes Verkleidungsteil, welches sich unterhalb einer Windschutzscheibe befinden kann. Im jeweiligen oberen Teil von Fig. 1 bis Fig. 3 ist ein Querschnitt des Verkleidungsteils 14 mit einer in Fig. 1 im Inneren 16 des Verkleidungsteils 14 befindlichen Bedienvorrichtung 18, von der in Fig. 3 dann ein Berührungsbildschirm 20 aus dem Verkleidungsteil 14 heraus in den Fahrgastraum 12 ausgefahren ist. Das Innere 16 stellt somit einen Verstauraum für den Berührungsbildschirm 20 dar. Die Bedienvorrichtung 18 kann eine Verschwenkeinrichtung 42 mit einer Trägerplatte 22 und an gegenüberliegenden Seiten der Trägerplatte 22 jeweils ein Paar Schwenkelemente 24, 26 und 24', 26' aufweisen. Ein Elektromotor 28 stellt eine Verfahreinrichtung dar.

Der Berührungsbildschirm 20 kann fest mit der Trägerplatte 22 verbunden sein. Insbesondere ist der Berührbildschirm ausschließlich über die Trägerplatte 22 gehalten. Bevorzugt ist die Trägerplatte 22 ausschließlich über die Schwenkelemente 24, 24', 26, 26' in dem Kraftfahrzeug 10 gehalten. Auf der Trägerplatte 22 oder in diese integriert kann eine Elektronik zum Betreiben des Berührungsbildschirms 20 angeordnet sein. Der Berührungsbildschirm 20 kann z.B. auf einen elektrischen Anschluss der Trägerplatte 22 aufgesteckt sein.

Die Schwenkelemente 24, 24', 26, 26' können beispielsweise auf der Grundlage von Stangen oder Platten gebildet sein. Jedes Schwenkelement 24, 24', 26, 26' weist an gegenüberliegenden Enden jeweils ein Drehgelenk auf. Die Schwenkelemente 24, 26 sind an einer Seite 30 der Trägerplatte 22 durch Drehgelenke 32, 34 gehalten. Auf einer gegenüberliegenden zweiten Seite 30' der Trägerplatte 22 können die zwei weiteren Schwenkelemente 24', 26' ebenfalls über Drehgelenke an der Trägerplatte 22 angeordnet sein. Die Schwenkelemente 24, 26, 24', 26' können in einem Aufhängungsbereich mit dem Verkleidungsteil 14 über jeweils ein weiteres Drehgelenk 40, verbunden sein. Die Trägerplatte kann hierdurch in dem Verkleidungsteil 14 an den Schwenkelementen aufgehängt sein. Das Schwenkelement 24 kann mit einem Getriebe des Elektromotors 28 verbunden sein, so dass ein Rotor des Elektromotors 28 über das Getriebe das Schwenkelement 24 um eine Rotationsachse drehen kann. Das Schwenkelement 26 kann beispielsweise über ein Drehgelenk 36 mit einem festen Bestandteil des Verkleidungsteils 14 drehbar verbunden sein. Insgesamt sind so bei jedem Schwenkelement 24, 26, 24', 26' die jeweils gegenüberliegenden Enden 38, 40 drehbar gelagert, wobei die Enden 38 an der Trägerplatte 22 und die Enden 40 an dem Verkleidungsteil 14 drehbar gelagert sind. Insgesamt bilden so die Schwenkelemente 24, 26 und die Trägerplatte 22 ein einfaches Viergelenk in Form der Verschwenkeinrichtung 42 und entsprechend auch die Schwenkelemente 24' und 26' und die Trägerplatte 22 ein weiteres Viergelenk 42' der Verschwenkeinrichtung 42. Durch Drehen der Welle des Elektromotors 28, also durch Betreiben des Elektromotors 28, kann mittels der durch die Viergelenkte der Verschwenkeinrichtung 42 jeweils gebildeten Koppelgetriebe der Berührungsbildschirm 20 durch einen Spalt 44 des Verkleidungsteils 14 ausgefahren werden.

In Fig. 1 ist der Berührungsbildschirm 20 in einer Verstaustellung S1 gezeigt, in welcher eine Kante oder Oberseite 46 des Berührungsbildschirms 20 mit einer Außenoberfläche 48 des Verkleidungsteils 14 bündig abschließen kann, so dass der Spalt 44 durch die Oberseite 46 verschlossen ist.

Durch Aktivieren des Elektromotors 28 mit dem Berührungsbildschirm 20 in seiner Verstaustellung S1, in welcher eine Anzeigefläche 50 sich vollständig im Inneren 16 des Verkleidungsteils 14 befindet, wird der Berührungsbildschirm 20 in einer Schwenkbewegung 52 (siehe Fig. 2) in eine Gebrauchsstellung S 2 (siehe Fig. 3) verfahren. Mit "im Inneren" ist gemeint, dass sich in der Verstaustellung S1 der Berührungsbildschirm 20 bis auf seine Oberseite 46 vom Fahrzeuginnenraum 12 aus gesehen hinter der Außenoberfläche 48 des Verkleidungsteils 14 befindet. In der Gebrauchsstellung S2 ragt der Berührungsbildschirm 20 in den Fahrzeuginnenraum 12 hinein, so dass von einem Benutzer die Anzeigefläche 50 betrachtet für eine Bedienung berührt werden kann. Durch eine umgekehrte Drehbewegung der Welle des Elektromotors 28 kann der Berührungsbildschirm 20 dann wieder von der Gebrauchsstellung S2 in die Verstaustellung S1 in das Verkleidungsteil 14 eingefahren werden. Die Schwenkbewegung 52 kann durch Wahl der Abstände der jeweiligen Drehgelenke 38, 40 und eine Wahl der Länge der Schwenkelemente 24, 26 und 24' und 26' eingestellt sein. Auf jeder Seite 30, 30' der Trägerplatte 22 kann eine Abstand der Drehgelenke 38 am Trägerelement 22 einerseits und ein Abstand der Drehgelenke 40 auf Seiten des Verkleidungsteils 14 andererseits unterschiedlich sein. Insbesondere ist der Abstand der Drehgelenke 40 kleiner als der Abstand der Drehgelenke 38.

Eine Breite B1 der Trägerplatte 22 kann kleiner oder gleich einer Bildschirmbreite B2 des Berührungsbildschirms 22 in einer Längsrichtung einer länglichen Erstreckung des Spalts 44 sein. Die Seiten 30, 30' ragen also in Richtung der Bildschirmbreite B2, was hier der Fahrzeugsquerrichtung entspricht, nicht über die Ränder des Berührungsbildschirms 20 hinaus. Mit anderen Worten fluchten die Seiten 30, 30' mit den Rändern des Berührungsbildschirms 20 beziehungsweise bei B1 < B 2 ragen die Seiten des Berührungsbildschirms 20 über die Trägerplatte 22 in Richtung der Bildschirmbreite B2, d.h. der Spaltlänge, hinaus.

Ein Verhältnis einer Spaltbreite D 1 zu einer Bildschirmdicke D 2 kann in einem Bereich von größer als 1,0 bis zu 1,5 liegen. Die Spaltbreite D1 und die Bildschirmdicke D2 sind hierbei Entlang einer Richtung einer Flächennormale N der Anzeigefläche 50 des Berührungsbildschirms 20 in der Gebrauchsstellung S2. Die Bildschirmdicke D 2 kann insbesondere entlang einer gesamten Bildschirmhöhe H1 konstant sein. Die Flächennormale N steht senkrecht auf der Anzeigefläche 50.

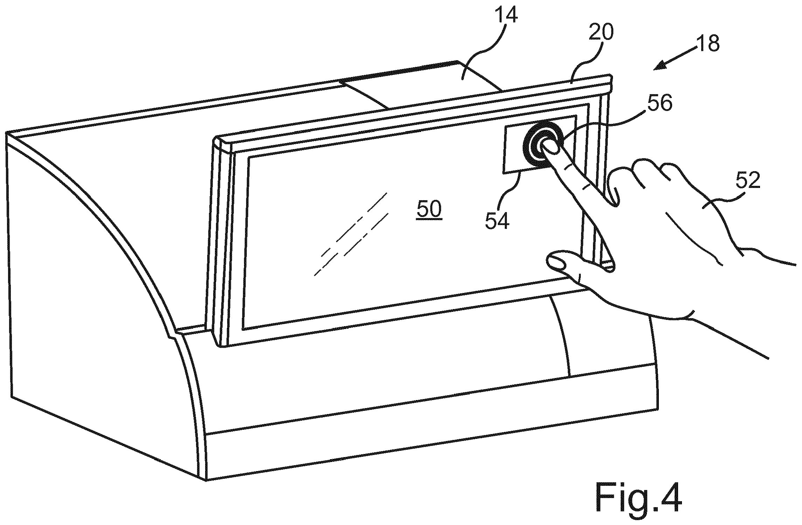

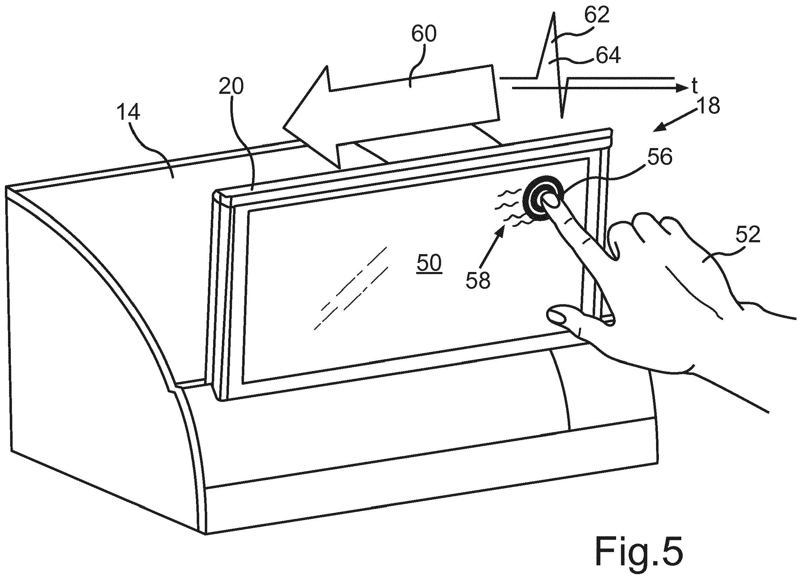

In Fig. 4 und Fig. 5 ist ein Bedienvorgang der Bedienvorrichtung 18 veranschaulicht, wie er durch einen Benutzer 52 durchgeführt werden kann. Auf der Anzeigefläche 50 können grafische Objekte angezeigt werden, beispielsweise ein graphisches Bedienelement 54, das der Benutzer 52 durch eine Bildschirmberührung 56 auf der Anzeigefläche 50 berühren kann. Fig. 5 veranschaulicht die Reaktion der Bedienvorrichtung 18.

Dem Benutzer 52 wird an der Anzeigefläche 50 in Reaktion auf die Bildschirmberührung 56 eine taktile Rückmeldung 58 in Form einer seitlichen Impulsbewegung 60 des Berührungsbildschirms 20 dargeboten. In Fig. 5 ist ein Amplitudenverlauf 62 der Bildschirmbewegung 60 über der Zeit t veranschaulicht. Zu erkennen ist, dass die Bildschirmbewegung 60 hauptsächlich entlang einer Auslenkungsrichtung 4 unidirektional erfolgt, das heißt ein dominanter Auslenkungsteil 64 in eine Richtung vorhanden ist. Der Benutzer 52 spürt an der Anzeigefläche 50 hierdurch einen Auslenkungsimpuls. Das grafische Bedienobjekt 54 verhält sich damit wie eine mechanische Taste oder ein mechanischer Schalter, der ein spürbares oder taktiles Klicken verursacht.

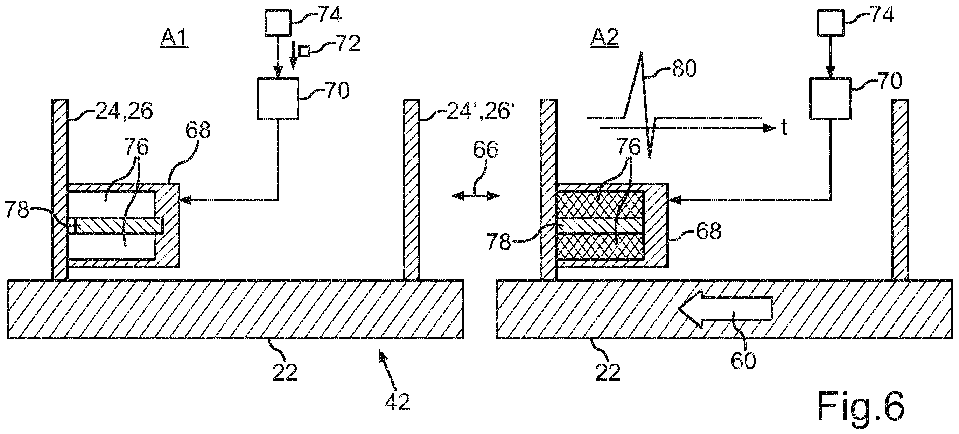

Fig. 6 veranschaulicht eine Möglichkeit, wie bei der Bedienvorrichtung 18 ausgehend von einer Ausgangslage A1 durch eine einmalige Auslenkung 66 in eine Auslenklage A2 des Bildschirms 20 die taktile Rückmeldung 58 in der beschriebenen Form verursacht werden kann. Die Bedienvorrichtung 18 kehrt danach selbständig in die Ausgangslage A1 zurück.

Zum Erzeugen der taktilen Rückmeldung 58 weist die Bedienvorrichtung 18 eine Aktoreinheit 68 auf, die durch eine Steuereinrichtung 70, beispielsweise einen Mikrocontroller, gesteuert wird. Die Steuereinrichtung 70 steuert die Aktoreinheit 68 in Abhängigkeit von einem Kraftsignal 72 einer Kraftsensoreinrichtung 74. Die Kraftsensoreinrichtung 74 kann in an sich aus dem Stand der Technik bekannter Weise ausgestaltet sein.

In Fig. 6 ist eine Ausführungsform gezeigt, bei welcher die Aktoreinheit 68 an der Verschwenkeinrichtung 42, beispielsweise an einem der Schwenkelemente 24, 24', 26. 26' angeordnet ist. Die Aktoreinheit 68 kann eine elektrische Spule 76 aufweisen, welche ein Ankerelement 78 bewegen kann. Falls durch das Kraftsignal 72 eine Berührkraft des Benutzers 52 an der Anzeigefläche 50 größer als ein vorbestimmter Schwellwert detektiert wird, erzeugt die Steuereinrichtung 70 ein Aktivierungssignal 80, dessen Verlauf über der Zeit t in Fig. 6 veranschaulicht ist. Das Aktivierungssignal 80 ist dazu eingerichtet, die Spule 76 zu bestromen. Im bestromten Zustand beschleunigt die Spule 76 das Ankerelement 78, sodass das Ankerelement 78 gegen das Schwenkelement 24, 24', 26, 26' schlägt, an welchem die Aktoreinheit 68 befestigt ist. Das Schwenkelement stellt somit ein Anschlagselement dar. Der Impuls des beschleunigten Ankerelements 78 überträgt sich als die Auslenkbewegung 60 auf die Trägerplatte 22 und über diese auf den Bildschirm 20.

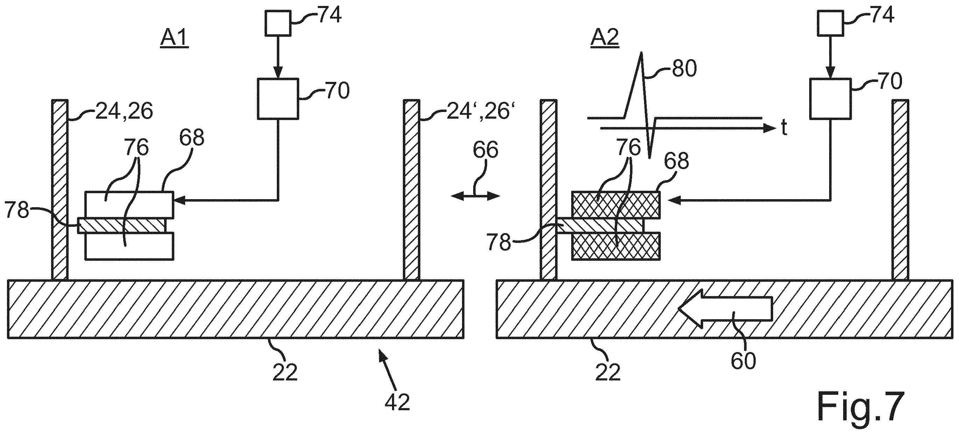

Während Fig. 6 also die Aktoreinheit mit Sitz an dem Schwenkelement zeigt und sich hierdurch die Aktoreinheit 68 bei der Auslenkung 66 mitbewegt, kann, wie in Fig. 7 gezeigt, die Aktoreinheit 68 auch einen festen Sitz an einem Gehäuse der Bedienvorrichtung 18 aufweisen, sodass sich die Aktoreinheit 68 bei der Auslenkung 66 nicht mitbewegt, sondern sich die Verschwenkeinrichtung 42 relativ zur Aktoreinheit 68 bewegt. Auch hierdurch ist es möglich, dass die Aktoreinheit 68 beim Auslösen durch das Aktivierungssignal 80 das Ankerelement 78 auf die Verschwenkeinrichtung 42 schlägt und hierdurch den Bildschirm 20 in die Auslenkbewegung 60 versetzt.

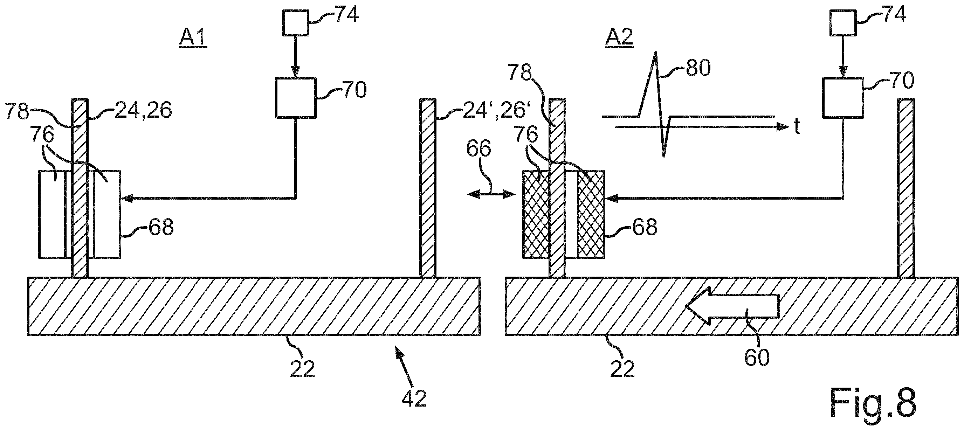

Das Ankerelement 78 besteht aus einem magnetischen Material und fährt in die Endlage in der Spule 76. Fig. 8 zeigt eine alternative Ausführungsform, bei welcher eines der Schwenkelemente 24, 24', 26, 26' selbst das Ankerelement 78 darstellt. Bei bestromter Spule 76 wird das Ankerelement 78 von der Spule angezogen und hierdurch die Bewegung 60 verursacht.

Durch die Bedienvorrichtung 18 ist somit der Berührungsbildschirm 20 aus einer Schalttafel ausfahrbar oder inszenierbar dargestellt. Die Bedienvorrichtung 18 weist eine Displayinszenierung und eine zugehörige Kinematik auf, bei der der Berührungsbildschirm 20 verhältnismäßig dünn ausgestaltet sein kann und durch einen korrespondierend ausgestalteten Spalt 44 aus einer Schalttafel ausfahren kann, ohne dass ein zusätzlicher Deckel benötigt wird. Hierzu ist die speziell ausgelegte Viergelenks-Kinematik vorgesehen.

Bei der Bedienvorrichtung wird nun zusätzlich eine haptische Rückmeldung oder eine taktile Rückmeldung hervorgerufen. Bei Bedienung des Berührungsbildschirms 20 wird die haptische Rückmeldung an den Benutzer 52 ausgegeben. Diese haptische Rückmeldung wird durch eine impulsartige Anregung eines der Koppelelemente oder Schwenkelemente der Viergelenks-Kinematik, das heißt der Verschwenkeinrichtung 42, erreicht. Durch den freistehenden und/oder frei aufgehängten Berührungsbildschirm 20 ist eine Anregung und Weiterleitung des Impulses des Ankerelements 78 auf den Bildschirm 20 und über dessen Anzeigefläche 50 auf den Benutzer 52 ermöglicht. Ausgelöst wird der Impuls mittels einer geeigneten Kraftsensorik der Kraftsensoreinrichtung 74, wobei die Steuereinrichtung 70 bei Überschreiten eines vorbestimmten Schwellwertes des Kraftsignals 72 das Aktivierungssignal 80 erzeugt.

Dabei sind verschiedenen Möglichkeiten der Anregung denkbar, wie sie beschrieben wurden. Eine separate Aktoreinheit 68 schlägt seitlich auf ein Koppelglied oder Schwenkelement, wobei die Aktoreinheit 68 am Schwenkelement selbst sitzen kann (Fig. 6) und sich mitbewegt, oder die Aktoreinheit 68 fest am Gehäuse sitzen kann (Fig. 7). Die Aktoreinheit schlägt beim Auslösen mit dem Ankerelement 78 auf das Koppelglied oder Schwenkelement und regt hierdurch den Berührungsbildschirm 20 haptisch an. Ein Schwenkelement oder Koppelglied kann auch selbst aus einem magnetischen Material bestehen und in eine Endlage in der Spule 78 fahren, wobei dann die Spule das Anschlagselement und das Schwenkelement das Ankerelement 78 darstellt. Bei Kraftüberschreitung der Bedienkraft des Benutzers 52 gemäß Schwellwert wird die Spule 76 impulsartig bestromt und zieht das Koppelglied oder Schwenkelement kurzzeitig zur Seite an. Denkbar ist auch eine Wirkung der Aktoreinheit 68 in Ausfahr- beziehungsweise Schwenkrichtung des Berührungsbildschirms 20, also nicht seitlich.

So ergibt sich insgesamt eine einfache Umsetzungsmöglichkeit einer haptischen Rückmeldung für einen verfahrbaren, inszenierten Berührungsbildschirm.

Insgesamt zeigt das Beispiel, wie durch die Erfindung ein inszeniertes Touch-Display mit aktuatorischer Haptik bereitgestellt werden kann.

## Patentansprüche

1. Bedienvorrichtung (18) für ein Kraftfahrzeug (10), aufweisend:
- einen Berührungsbildschirm (20) zum Anzeigen von graphischen Objekten (54) auf einer Anzeigefläche (50) und zum Erfassen von Berührkoordinaten einer durch einen Benutzer (52) an der Anzeigefläche (50) getätigten Bildschirmberührung (56),
- eine Verschwenkeinrichtung (42) zum Halten des Berührungsbildschirms (20) an einem Verkleidungsteil (14) des Kraftfahrzeugs (10) und zum Verschwenken des Berührungsbildschirms (20) bezüglich des Verkleidungsteils (14),
**dadurch gekennzeichnet, dass**
für die Verschwenkeinrichtung (42) eine Aktoreinheit (68) bereitgestellt ist, welche dazu eingerichtet ist, in Abhängigkeit von einem vorbestimmten Aktivierungssignal (80) die Verschwenkeinrichtung (42) mechanisch zu erschüttern und hierdurch an der Anzeigefläche (50) eine taktile Rückmeldung (58) für den Benutzer (52) zu erzeugen.

2. Bedienvorrichtung (18) nach Anspruch 1, wobei die Aktoreinheit (68) eine elektrische Spule (76) aufweist, die dazu eingerichtet ist, die Erschütterung durch Beschleunigen eines ferromagnetischen Ankerelements (78) und anschließendes Kollidieren des beschleunigten Ankerelements (78) mit einem Anschlagelement (24, 76) zu erzeugen.

3. Bedienvorrichtung (18) nach Anspruch 2, wobei als das Ankerelement (78) ein von der Verschwenkeinrichtung (42) verschiedenes Massestück bereitgestellt ist und als das Anschlagelement (78) ein Element (24) der Verschwenkeinrichtung (42) vorgesehen ist oder wobei als das Ankerelement (78) das Element (24) der Verschwenkeinrichtung (42) vorgesehen ist und die elektrische Spule (76) das Anschlagselement bildet.

4. Bedienvorrichtung (18) nach einem der vorhergehenden Ansprüche, wobei die Aktoreinheit (68) an der Verschwenkeinrichtung (42) befestigt und von dieser getragen ist oder wobei die Verschwenkeinrichtung (42) bezüglich der Aktoreinheit (68) beweglich gelagert ist.

5. Bedienvorrichtung (18) nach einem der vorhergehenden Ansprüche, wobei die Aktoreinheit (68) dazu eingerichtet ist, die Verschwenkeinrichtung (42) mit einem parallel zu der Anzeigefläche (50) ausgerichteten Impuls zu beaufschlagen, oder wobei die Aktoreinheit (68) dazu eingerichtet ist, die Verschwenkeinrichtung (42) mit einem Impuls zu beaufschlagen, der eine überwiegende Richtung senkrecht (N) zur Anzeigefläche (50) aufweist.

6. Bedienvorrichtung (18) nach einem der vorhergehenden Ansprüche, wobei eine Steuereinrichtung (70) bereitgestellt ist, die dazu eingerichtet ist, das Aktivierungssignal (80) bei Erfassen der Bildschirmberührung (56) zu erzeugen.

7. Bedienvorrichtung (18) nach Anspruch 6, wobei zumindest ein Kraftsensor (74) zum Erfassen einer von dem Benutzer (52) bei der Bildschirmberührung (56) auf die Anzeigefläche (50) ausgeübten Anpresskraft bereitgestellt ist und die Steuereinrichtung (70) dazu eingerichtet ist, das Aktivierungssignal (80) zu erzeugen, falls die erfasste Anpresskraft größer als ein vorbestimmter Schwellwert ist.

8. Kraftfahrzeug (10), aufweisend:
- Verkleidungsteil (14), durch welches ein Verstauraum (16) von einem Fahrgastraum (12) des Kraftfahrzeugs (10) abgegrenzt ist,
- eine Bedienvorrichtung (18) nach einem der vorhergehenden Ansprüche, wobei der Berührungsbildschirm (20) der Bedienvorrichtung (20) über die Verschwenkeinrichtung (42) der Bedienvorrichtung (18) mit dem Verkleidungsteil (14) verbunden ist,
- eine Verfahreneinrichtung (28), welche dazu eingerichtet ist, den Berührungsbildschirm (20) mittels der Verschwenkeinrichtung (42) zwischen einer Verstaustellung (S1), in welcher der Berührungsbildschirm (20) größtenteils oder vollständig in dem Verstauraum (16) angeordnet ist, und einer Gebrauchsstellung (S2), in welcher die Anzeigefläche (50) des Berührungsbildschirms (20) in dem Fahrgastraum (12) angeordnet ist, zu verschwenken.

9. Kraftfahrzeug (10) nach Anspruch 8, wobei das Verkleidungsteil (14) einen Spalt (44) aufweist und die Verfahreinrichtung (28) dazu eingerichtet ist, den Berührungsbildschirm (20) beim Verschwenken zwischen der Verstaustellung (S1) und der Gebrauchsstellung (S2) durch den Spalt (44) hindurch zu bewegen, wobei in der Verstaustellung (S1) der Spalt (44) durch eine Kante (46) des Berührungsbildschirms (20) verschlossen ist.

10. Verfahren zum Betreiben eines Berührungsbildschirms (20) in einem Kraftfahrzeug (10), wobei eine Verschwenkeinrichtung (42) den Berührungsbildschirm (20) an einem Verkleidungsteil (14) des Kraftfahrzeugs (10) hält und eine Verfahreinrichtung (28) den Berührungsbildschirm (20) mittels der Verschwenkeinrichtung (42) bezüglich des Verkleidungsteils (14) verschwenkt,
**dadurch gekennzeichnet, dass**
eine Aktoreinheit (68) in Abhängigkeit von einem vorbestimmten Aktivierungssignal (80) die Verschwenkeinrichtung (42) mechanisch erschüttert und hierdurch an einer Anzeigefläche (50) des Berührungsbildschirm (20) eine taktile Rückmeldung (58) für einen Benutzer (52) erzeugt.

## Claims

1. Operating device (18) for a motor vehicle (10), comprising:
- a touch screen (20) for displaying graphical objects (54) on a display surface (50) and detecting touch coordinates of a touch screen (56) generated by a user (52) on the display surface (50),
- a pivoting device (42) for holding the touch screen (20) on a covering part (14) of the motor vehicle (10) and for pivoting the touch screen (20) with respect to the covering part (14),
**characterized in that**
an actuator unit (68) is provided for the pivoting device (42), which is adapted to mechanically shake the pivoting device (42) in response to a predetermined activation signal (80) and thereby on the display surface (50) generate a tactile feedback (58) for the user (52).

2. Operating device (18) according to claim 1, wherein the actuator unit (68) comprises an electric coil (76) which is adapted to generate the shaking by accelerating a ferromagnetic anchor element (78) and then colliding the accelerated anchor element (78) with a stop element (24, 76).

3. Operating device (18) according to claim 2, wherein as the anchor element (78) a mass piece different from the pivoting means (42) is provided, and as the stop element (78) an element (24) of the pivoting device (42) is provided, or wherein as the anchor element (78) the element (24) of the pivoting device (42) is provided, and the electric coil (76) forms the stop element.

4. Operating device (18) according to any one of the preceding claims, wherein the actuator unit (68) is attached to the pivoting device (42) and supported by the latter, or wherein the pivoting device (42) is movably mounted with respect to the actuator unit (68).

5. Operating device (18) according to one of the preceding claims, wherein the actuator unit (68) is adapted to act on the pivoting device (42) with a pulse aligned parallel to the display surface (50), or wherein the actuator unit (68) is adapted to apply a pulse to the pivoting device (42) which has a predominant direction perpendicular (N) to the display surface (50).

6. Operating device (18) according to any one of the preceding claims, wherein a control device (70) is provided which is adapted to generate the activation signal (80) upon detection of a screen touch (56).

7. Operating device (18) according to claim 6, wherein at least one force sensor (74) is provided for detecting a pressing force exerted by the user (52) on making a screen touch (56) on the display surface (50), and the control device (70) is adapted to generate the activation signal (80) if the detected pressing force is greater than a predetermined threshold value.

8. Motor vehicle (10), comprising:
- a covering part (14), by which a storage space (16) of a passenger compartment (12) of the motor vehicle (10) is delimited,
- an operating device (18) according to one of the preceding claims, wherein the touch screen (20) of the operating device (20) via the pivoting device (42) of the operating device (18) is connected to the covering part (14),
- a processing device (28) which is adapted to pivot the touch screen (20) by means of the pivoting device (42) between a stowage position (S1), in which the touch screen (20) is arranged largely or completely in the storage space (16), and a usage position (S2), in which the display surface (50) of the touch screen (20) is arranged in the passenger compartment (12).

9. Motor vehicle (10) according to claim 8, wherein the covering part (14) has a gap (44) and the processing device (28) is adapted to move the touch screen (20) during pivoting between the stowage position (S1) and the usage position (S2) through the gap (44), wherein in the stowage position (S1) the gap (44) is closed by an edge (46) of the touch screen (20).

10. Method of operating a touch screen (20) in a motor vehicle (10), wherein a pivoting device (42) supports the touch screen (20) on a covering part (14) of the motor vehicle (10) and a processing device (28) pivots the touch screen (20) by means of the pivoting device (42) with respect to the covering part (14),
**characterized in that**
an actuator unit (68) mechanically shakes the pivoting device (42) in response to a predetermined activation signal (80), and thereby generates a tactile feedback (58) to a user (52) on a display surface (50) of the touch screen (20).

## Revendications

1. Dispositif de commande (18) pour un véhicule automobile (10), présentant :
- un écran tactile (20) pour l'affichage d'objets graphiques (54) sur une surface d'affichage (50) et pour la détection de coordonnées de contact d'un contact d'écran (56) opéré par un utilisateur (52) au niveau de la surface d'affichage (50),
- un dispositif de pivotement (42) pour le maintien de l'écran tactile (20) au niveau d'une partie d'habillage (14) du véhicule automobile (10) et pour le pivotement de l'écran tactile (20) par rapport à la partie d'habillage (14),
**caractérisé en ce que**
une unité d'actionneur (68) est fournie pour le dispositif de pivotement (42), laquelle est conçue pour secouer mécaniquement le dispositif de pivotement (42) en fonction d'un signal d'activation (80) prédéterminé et ainsi générer une réponse tactile (58) pour l'utilisateur (52) au niveau de la surface d'affichage (50).

2. Dispositif de commande (18) selon la revendication 1, dans lequel l'unité d'actionneur (68) présente une bobine électrique (76) qui est conçue pour générer la secousse par accélération d'un élément d'ancrage (78) ferromagnétique et collision successive de l'élément d'ancrage (78) accéléré avec un élément de butée (24, 76).

3. Dispositif de commande (18) selon la revendication 2, dans lequel un poids différent du dispositif de pivotement (42) est fourni en tant que l'élément d'ancrage (78) et un élément (24) du dispositif de pivotement (42) est prévu en tant que l'élément de butée (78) ou dans lequel l'élément (24) du dispositif de pivotement (42) est prévu en tant que l'élément d'ancrage (78) et la bobine électrique (76) forme l'élément de butée.

4. Dispositif de commande (18) selon l'une quelconque des revendications précédentes, dans lequel l'unité d'actionneur (68) est fixée au dispositif de pivotement (42) et portée par celui-ci ou dans lequel l'élément de pivotement (42) est logé mobile par rapport à l'unité d'actionneur (68).

5. Dispositif de commande (18) selon l'une quelconque des revendications précédentes, dans lequel l'unité d'actionneur (68) est conçue pour solliciter le dispositif de pivotement (42) avec une impulsion orientée parallèlement à la surface d'affichage (50), ou dans lequel l'unité d'actionneur (68) est conçue pour solliciter le dispositif de pivotement (42) avec une impulsion, qui présente une direction principale perpendiculaire (N) à la surface d'affichage (50).

6. Dispositif de commande (18) selon l'une quelconque des revendications précédentes, dans lequel un dispositif de commande (70) est fourni, qui est conçu pour générer le signal d'activation (80) lors de la détection du contact d'écran (56).

7. Dispositif de commande (18) selon la revendication 6, dans lequel au moins un capteur de force (74) est fourni pour la détection d'une force de pression exercée par l'utilisateur (52) lors du contact d'écran (56) sur la surface d'affichage (50) et le dispositif de commande (70) est conçu pour générer le signal d'activation (80), si la force de pression est supérieure à une valeur seuil prédéterminée.

8. Véhicule automobile (10), présentant :
- une partie d'habillage (14), par laquelle un espace de rangement (16) est délimité par rapport à un habitacle (12) du véhicule automobile (10),
- un dispositif de commande (18) selon l'une quelconque des revendications précédentes, dans lequel l'écran tactile (20) du dispositif de commande (20) est relié à la partie d'habillage (14) par le biais du dispositif de pivotement (42) du dispositif de commande (18),
- un dispositif de déplacement (28), lequel est conçu pour pivoter l'écran tactile (20) au moyen du dispositif de pivotement (42) entre une position de rangement (S1), dans laquelle l'écran de contact (20) est disposé en grande partie ou complètement dans l'espace de rangement (16), et une position d'utilisation (S2), dans laquelle la surface d'affichage (50) de l'écran tactile (20) est disposée dans l'habitacle (12).

9. Véhicule automobile (10) selon la revendication 8, dans lequel la partie d'habillage (14) présente une fente (44) et le dispositif de déplacement (28) est conçu pour déplacer l'écran tactile (20) lors du pivotement entre la position de rangement (S1) et la position d'utilisation (S2) à travers la fente (44), dans lequel la fente (44) est fermée par une arête (46) de l'écran tactile (20) dans la position de rangement (S1).

10. Procédé de fonctionnement d'un écran tactile (20) dans un véhicule automobile (10), dans lequel un dispositif de pivotement (42) maintient l'écran tactile (20) au niveau d'une partie d'habillage (14) du véhicule automobile (10) et un dispositif de déplacement (28) pivote l'écran tactile (20) au moyen du dispositif de pivotement (42) par rapport à la partie d'habillage (14),
**caractérisé en ce que**
une unité d'actionneur (68) secoue mécaniquement le dispositif de pivotement (42) en fonction d'un signal d'activation (80) prédéterminé et génère ainsi une réponse tactile (58) pour un utilisateur (52) au niveau de la surface d'affichage (50) de l'écran tactile (20).
